# EUROPEAN PATENT APPLICATION

(11) **EP 1 524 746 A1**
(43) Date of publication of application: **20.04.2005**
(21) Application number: 04077843.3
(22) Date of filing: 15.10.2004
(51) Int. Cl.: H02G 3/20, A47B 81/00

(54) **Shelf with removable electricity distribution units**

(30) Priority: 16.10.2003 IT PN20030072
(71) Applicant: Zorzi S.n.c. di Zorzi S. e M., 33080 Porcia (PN) (IT)
(72) Inventor: Zorzi, Michele, 33080 Porcia (PN) (IT)
(74) Representative: Da Riva, Ermanno

(57) **Abstract**

Shelf suitably shaped and capable of being equipped in various ways with removable electricity distribution units and/or devices for a wide range of uses, consisting of a parallelepipedal element (1) which is joined, on its upper side, to an element (2), by suitable screws (V) passing through the holes (221) in the projections (22), adjacent to a section (P) of extruded plastics material, and is joined on its underside to a covering trim element (3) after the interposition of all the electrical and/or electronic components and their wiring, the element 1 is provided with circular blind holes (12) for housing any necessary lamps and with an internal longitudinal channel (14) for housing electrical cables, joined to the said blind holes (2); from the channel (14) there runs a slot (15) in which the extruded section (P) is engaged, while at one end of the said slot (15) a cavity (16) is formed for housing the element (2) after a round-section (O) gasket, commonly called a "round gasket", has been interposed between these elements (16, 2); this cavity (16) is partially blind, being more specifically blind in its circular region, while its remaining part forms a through hole and is connected to the L-shaped cavity (13), this cavity (13) being used for the removable fastening of the element (2) to the covering trim element (3) by means of corresponding roughened areas (Z2) formed on the element (2) and roughened areas (Z3) formed on the fins (33) of the element (3), thus forming a combination which provides complete resistance to the penetration of liquids according to the IP standards.

## Description

The present invention relates to a suitably shaped shelf which is usable for a wide range of applications, and which can be equipped with removable electrical and/or electronic units and/or devices for a considerable variety of applications. In particular, this shelf can house switches and outlets of various kinds such as electrical, television, satellite television and telephone outlets, and is also shaped in such a way as to form, when assembled together with other elements complementary to it, a single unit resistant to moisture and/or any splashes of water or the like, in order to form a waterproof structure in accordance with the strictest current standards relating to the safety of wiring and electrical installations. Furthermore, all the components of the said shelf are fully removable, such removal being carried out by a few simple operations, owing to the simplicity of design and construction of all the components making up the shelf.

Particularly in the field of bathroom furniture, there are known and widely used shelves of various kinds which house, in various ways and by various means, lamps of various kinds and/or outlets for electrical equipment.

All the shelves produced in this way are very difficult and costly to manufacture, and frequently fail to provide any real protection in respect of possible leakage of electricity due to moisture or splashes of water which may affect them, since all the electrical wires and cables of the shelves, connected to switches, lamps, transformers and possibly even the mains supply, are frequently insufficiently protected and/or actually exposed. Protective devices for all the electrical wires and cables have frequently been used, and these protective devices include, in particular, simple covers applied to the top of the shelf and fixed to it with screws in a known way, this arrangement being capable of preventing any leaks of electrical current, but clearly having a dubious effect in terms of appearance, while additionally creating considerable difficulties with respect to the construction and installation of the shelf in the environment in which it is to be fitted.

Conventional shelves for various forms of furnishing not only have the drawbacks summarized above, but have others, such as the fact that there are technical limitations on their production relating to the geographical areas in which the said shelves are to be sold. This is because electrical outlets used in the United States differ from those used in Europe, which in turn frequently differ from one European country to another; for example, German electrical outlets are completely different from all others. Therefore, whenever a manufacturer intends to establish the production of shelves, he must procure electrical fittings, such as electrical outlets, suitable for the countries in which the shelves are to be sold, necessitating the performance of different operations on the basic shelves.

The factors outlined above clearly limit the shelves and electrical and/or electronic or other devices fitted to them in terms of applications, safety, appearance and other characteristics.

The object of the present invention is to overcome the drawbacks described above by means of shelves produced by a process different from the existing one, not least by the application to them of support elements for the insertion of electrical and/or electronic components shaped suitably in order to enable each shelf to be assembled in a simple and rapid way with the parts to be fitted to it, to provide shelves forming articles of furniture which are also easily manageable and relatively economical by comparison with the aforesaid conventional methods.

To provide a better understanding of the characteristics and advantages of the invention in question in terms of application, as well as the advantages in terms of production and use, a preferred embodiment is described below, solely by way of example and without restrictive intent, with reference to the attached drawings, in which:
- Figures 1, 1a, 1' and 1a' are perspective views of the base element of the shelf, and in particular Figures 1 and 1' are views of the whole shelf, Figure 1 being a view from the underside while 1' is a view from the top side, and Figures 1a and 1a' are views of a part of the shelf in section along its longitudinal median part;
- In Figures 2, 2a and 2b, Figure 2 shows a plan view of the inner part of a cover part which is to house some of the electrical devices and is to be fitted on top of the shelf, while Figures 2a and 2b are perspective views of the same part from above and below;
- In Figures 3, 3a and 3b, Figure 3 shows a plan view of the inner part of a covering trim part which can be fixed to the underside of the shelf, while Figures 3a and 3b are perspective views of the same part from above and below.
- Figures 4 and 5 are exploded perspective views of the shelf of Figure 1 to which all the elements of the corresponding Figures 2 and 3 are to be joined.

With reference to the above figures, it should be noted that common parts are identified by the same reference numerals.

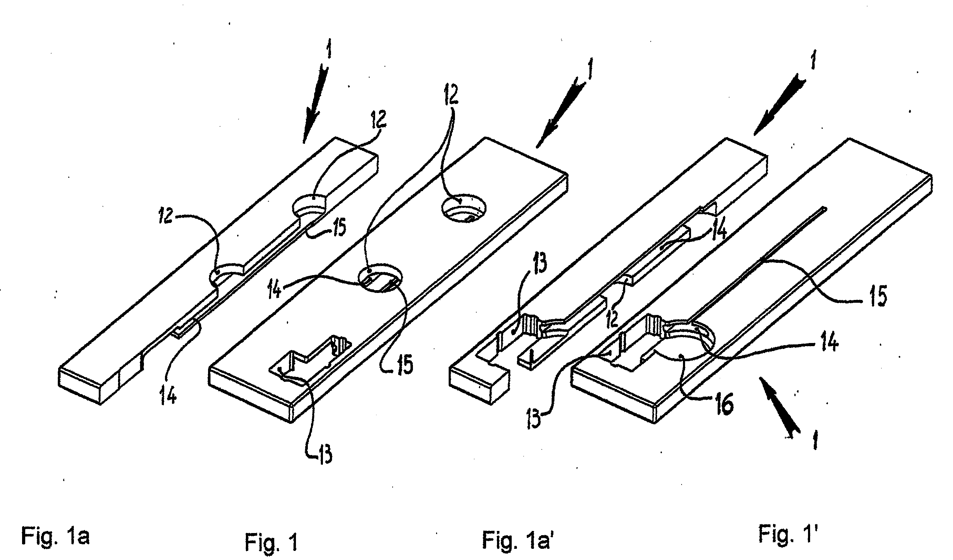

With reference to Figures 1, 1a, 1' and 1a', it will be seen that the shelf 1 is essentially formed by a basically parallelepipedal element of suitable material such as wood and/or wood substitute, but can also be formed from other types of equivalent materials, plastics, and the like.

In particular, Figure 1 is a perspective view from below of the shelf 1 in question, showing in particular blind circular holes 12 which are suitable for housing lamps of various kinds. Figure 1 also shows that there is a through hole 13, preferably L-shaped, which is to house a covering trim element 3 described below, this element being intended to cover services such as switches, outlets, etc., when fitted to the shelf.

In Figure 1' it will also be seen that the longitudinal section visible in this figure shows that a longitudinal channel 14, joining the circular blind holes 12 to the L-shaped thorugh hole 13, is formed inside the shelf.

This arrangement is also visible in Figures 1' and 1a', which are views from the opposite or lower side of the shelf 1. Figure 1' shows, in particular, a groove in the form of a slot 15 which joins a circular cavity 16 which has a considerable part of its perimeter falling within the L-shaped cavity 13. A portion of this cavity 16 is formed in the shelf 1 with a practically circular shape and extends, in respect of its dimensions, beyond the space removed by the formation of the L-shaped cavity 13.

Clearly, as stated above, this cavity 16 is therefore partially blind.

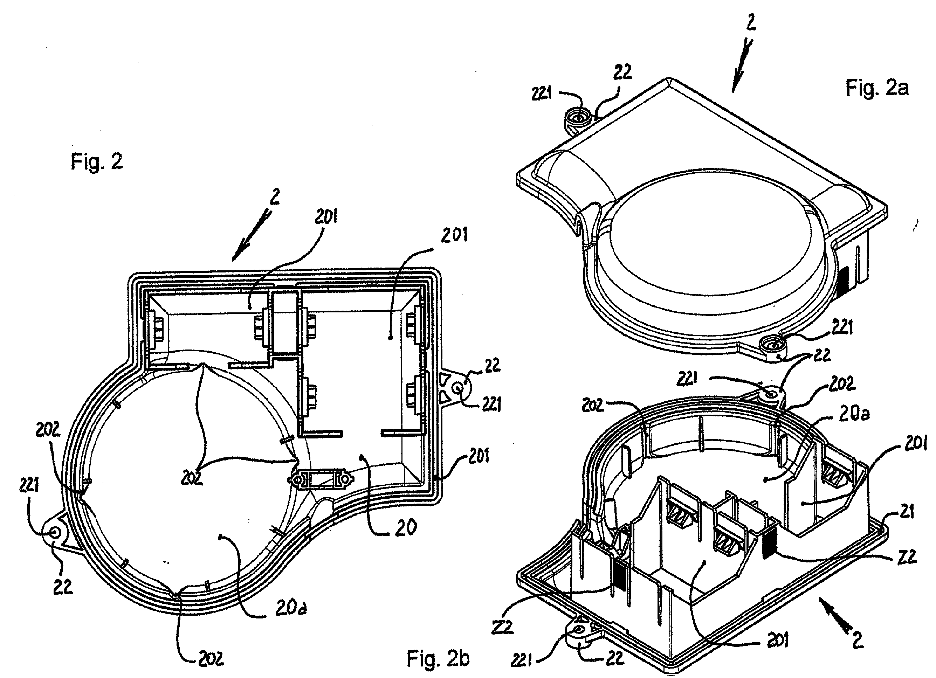

With reference to Figure 2, this shows a boxlike element 2 whose shape is essentially that of a basic rectangle 20 having, at one corner, a circularly shaped element 20a to which it is suitably connected by two of its sides and which extends beyond the basic dimension of the basic rectangle. A semicircular recess 21 is formed along the whole perimeter of the boxlike element 2 to house a suitable seal of circular section, commonly known as a "round gasket". Two projections 22 having a through hole 221 inside them are formed, again along the perimeter of this element 2, but on its outer side. Each of the said projections 22 has a through hole 221 designed to house screws whose function is described below.

A plurality of cavities 201, provided with fastening devices compatible with what are known as "modules", in other words the interchangeable modular elements such as outlets, switches and other devices, is formed in the rectangular portion 20 inside this element 2 which has been shaped in this way. Suitable roughened areas Z2, whose function is described below, are formed on the outside of the said cavities 201. Also within the said element 2, a suitable circular cavity is formed in the circular portion 20a, preferably for housing toroidal or similarly shaped transformers, but at the same time angled elements 202, forming the corners of a rectangle, are also formed in this cavity of the said circular portion 20a, to provide a possible seat for the insertion and housing of any necessary rectangular electronic devices such as the known electronic current transformers. As shown in Figure 2a, the portion of the element 2 formed by the rectangular part 20 of this element (2) extends vertically away from the perimetric edge 21 by a suitable distance, while remaining inside this edge (21), to permit the housing and fastening of the "modules", while its circular part 20a continues to have the same height as the perimetric edge 21. The whole arrangement is designed to provide a uniform support surface for the purposes described below. On the other hand, the part of the element 2 which will be external in use has the opposite configuration to that described above, the outer circular portion 20 projecting to a suitable extent from the rectangular portion 20 to which it is joined and connected.

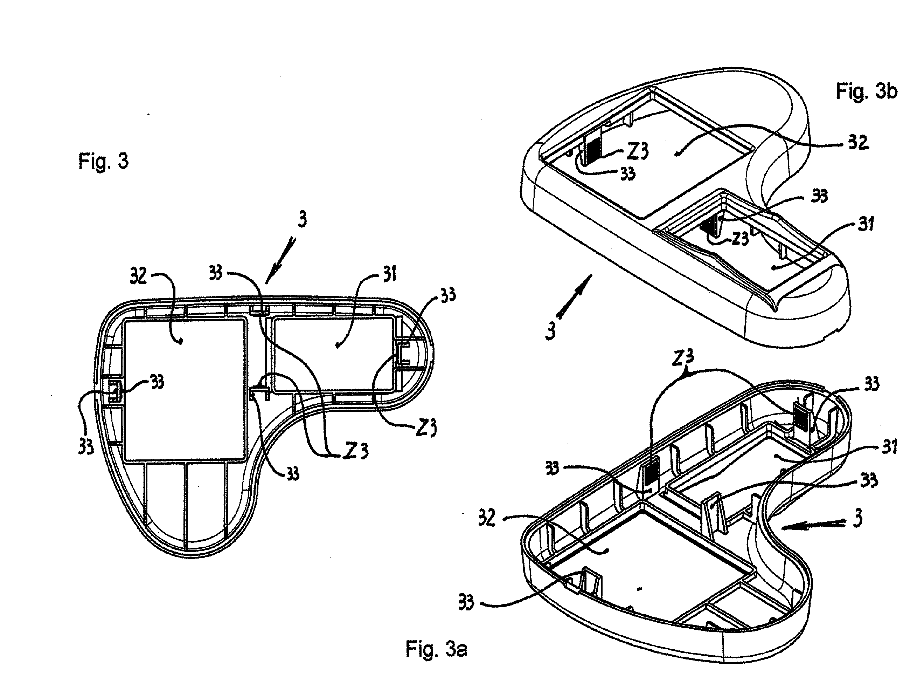

The element 3 shown in Figures 3, 3a and 3b will now be described; with particular reference to Figure 3, it should be noted that the said part 3 has a preferred shape which substantially resembles a letter "L" whose vertical stroke is wider than its horizontal stroke. The outer perimeter of the said element 3 formed in this way is curvilinear without a continuity solution. Rectangular through holes are formed within the aforesaid element 3, as shown in Figures 3 and 3b; more precisely, a rectangular aperture 31 is formed in the horizontal portion of the element 3 of Figure 3, while a second aperture 32, also rectangular, is located in the vertical portion of the element (3). Fins 33, with suitable roughened areas Z3 corresponding in position to the roughened areas Z2 of the cavity 201, project for a moderate and suitable distance from the side which will become the rear side of the aforesaid element 3 when it is applied to the shelf 1. These fins 33 with their roughened parts Z3 and the roughened parts Z2 of the cavity 201 jointly act as fastening elements between the element 3 and the element 2, by engaging removable with each other (Z2-Z3).

This completes the description of a preferred configuration of the elements which, when assembled together, form a complete shelf for use in furnishing; the assembly of these elements will now be described.

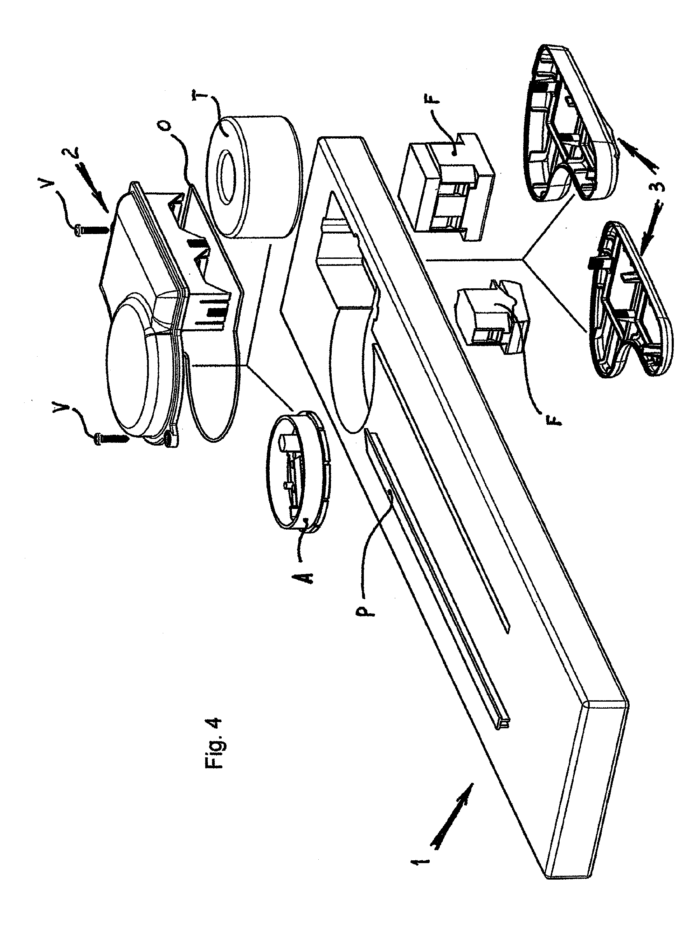

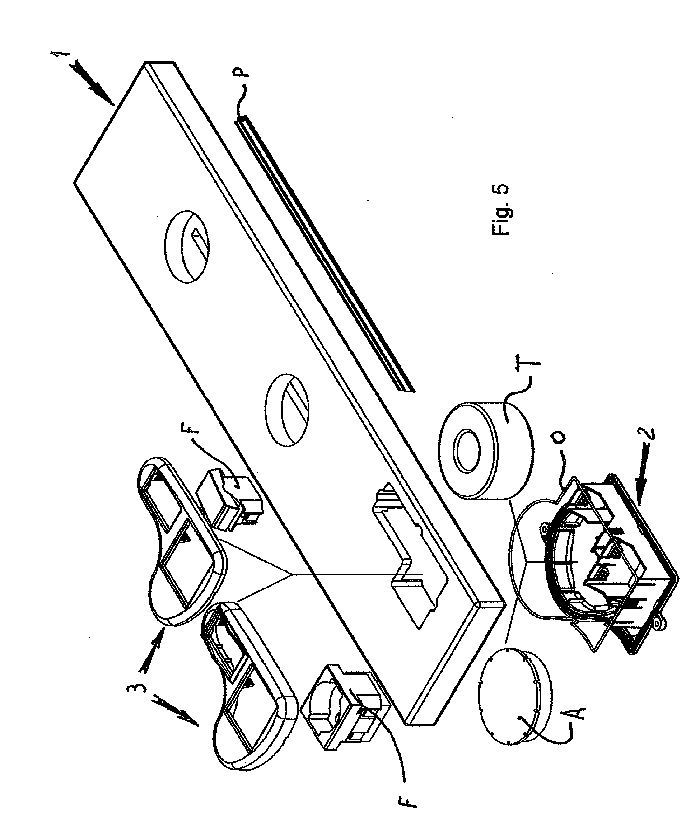

With particular reference to Figures 4 and 5, it will be noted that the described parts are to be assembled in order to form the subject of this description.

It should be borne in mind that, before all the described elements are assembled together, it will be necessary to form the wire connections between all the electrical and/or electronic components which are to complete the formation of this shelf by being inserted into it.

Figure 4 in particular shows a three-quarter view of the upper part of the shelf 1 in whose cavity 16 there will be fitted, sealing it (16) hermetically by the interposition of an O-ring gasket, also called a "round gasket", the element 2 of Figure 2 which houses, for example within it and particularly in the cavity of the said circular portion 20a, as in the description of this element (2) given above, a toroidal transformer T, which could clearly be replaced by a rectangular transformer which is widely available on the market and which can be inserted into the angle elements 202 formed within the said circular portion 20a. By using the adapter ring A, it is also possible to fit customized transformers, with shapes and dimensions meeting the user's requirements, in the circular portion 20a. The element 2 is then fixed to the shelf 1 by suitable screws V passing through the holes 221 formed in the projections 22. Figure 4 also shows how the slot 15 of the shelf can be covered, and therefore also sealed, by a section P, preferably made from extruded plastics material and widely available on the market, which together with the element 2 forms a single unit with the element 1 of the shelf, this unit being hermetically sealed, in other words watertight, and therefore having better safety characteristics than the existing solutions widely available on the market. Additionally, for greater electrical safety, and to ensure conformity with the strictest standards, a suitable element (not described here or shown in the attached drawings), appropriately shaped to further enhance the seal between the aforesaid two elements 2 and the section P, can be interposed between the section P and the element 2. Additionally, it is easy to see how the "modules", in other words the interchangeable modular elements, which may consist of outlets, switches and other devices, are inserted from the opposite side, in other words the lower side, of the shelf 1, as stated above, by making them penetrate into and become engaged in the cavities 201 which are not visible. These modules are pre-wired, as mentioned at the start of this description of the assembly of the elements forming part of the present invention, and clearly have fastening elements corresponding to those formed in the cavity 201 of the element 2. The fastening of the modules to the aforesaid cavities 201 is also of the disengageable type, thus enabling each module to be removed for inspection and/or replacement or any other operation, while also maintaining the advantageous characteristic defined as the interchangeability of the said modules. The element 3, shown in Figure 4 in two different possible configurations for final appearance-related and/or technical applications and purposes which may differ from what has been described, is then inserted to completely cover the lower part, purely for reasons of appearance.

Incidentally, it should be noted that the element 3 can vary in respect of its height without departing from the scope of the foregoing description. The element 3 is also fastened removably, specifically by engaging with the element 2 by the fastening of the corresponding roughened parts Z2 of the element 2 to the roughened parts Z3 of the fins 33 of the said element 3.

The above description is illustrated in Figure 5, which shows the same configuration of a shelf complete with all the requisite electrical and/or electronic services, viewed from the underside. It is important to note the blind holes, through which can be seen short portions of the slot 15 which runs from the cavity 14 which is not visible here, but which is shown in Figure 1a. In the lower part of the element 1 of the shelf, the through cavity 13 should be noted; the various elements 2, 3, F, etc. engage with each other through this cavity. It will be seen immediately that the element 2 with the O-ring gasket, the corresponding toroidal transformer T and the adapter and/or fixing ring A are positioned in the unseen upper part of the shelf 1. On the opposite side, in other words on the underside of the said element 1, it is possible to see the modules F, one representing a preferred switch, while the other represents any electrical outlet, which as described above are first wired up as necessary and then engaged removably in their corresponding seats formed in the housing cavities 201. This fitting, as described above, is reversible and is of the "snap" type. It is pointed out again that both the seats formed by the housing cavities 201 and the modules F are provided with fastening elements which are compatible with each other. The whole structure is sealed, as described above, by the element 3 as shown in Figure 5, which has a provided primarily for the sake of appearance and has variable dimensions in respect of its height; in particular, it is pointed out again that Figure 5 shows two particular elements of different height, but with completely identical functions.

This embodiment formed by the elements described above therefore provides significant advantages in terms of construction and use, which can be summarized as follows:
- Complete resistance to liquid penetration according to the IP standards;
- Modularity in respect of the installation of outlets, electrical components and the like;
- Versatility of construction, enabling the modules to be changed as desired by simple operations without the need to construct a new shelf;
- Complete removability of all components for inspection, replacement and any necessary maintenance, and the possibility of changing the existing configuration;
- Rationalization of production, yielding considerable economies in the manufacture of the complete shelves.

Clearly, the parts and/or devices used to produce the shelf in question can be varied in different ways; in particular, the number of modules and the configurations and arrangements of the parts described and specified for the production of the aforesaid shelf can be varied widely without departure from the scope of the above description and the following claims made with reference to the attached drawing, and therefore without departure from the scope of protection of the present patent.

## Claims

1. Shelf suitably shaped and capable of being equipped in various ways with removable electricity distribution units and/or devices for a wide range of uses, consisting of a parallelepipedal element (1) which is joined, on its upper side, to an element (2), by suitable screws (V) passing through the holes (221) in the projections (22), adjacent to a section (P) of extruded plastics material, and is joined on its underside to a covering trim element (3) after the interposition of all the electrical and/or electronic components and their wiring, **characterized in that** the element 1 is provided with circular blind holes (12) for housing any necessary lamps and with an internal longitudinal channel (14) for housing electrical cables, joined to the said blind holes (2); from the channel (14) there runs a slot (15) in which the extruded section (P) is engaged, while at one end of the said slot (15) a cavity (16) is formed for housing the element (2) after a round-section (O) gasket, commonly called a "round gasket", has been interposed between these elements (16, 2); this cavity (16) is partially blind, being more specifically blind in its circular region, while its remaining part forms a through hole and is connected to the L-shaped cavity (13), this cavity (13) being used for the removable fastening of the element (2) to the covering trim element (3) by means of corresponding roughened areas (Z2) formed on the element (2) and roughened areas (Z3) formed on the fins (33) of the element (3), thus forming a combination which provides complete resistance to the penetration of liquids according to the IP standards.

2. Shelf according to the preceding claim, **characterized in that** the element (2) is provided in its cavities (201) with fastening elements for the removable connection of modules (F), these fastening elements permitting the interchange of the said modules (F), the said element (2) being additionally provided, along the whole of its perimeter, with a semicircular recess (21), for housing a suitable sealing gasket (O) to provide a complete seal and consequent protection against liquid penetration according to the IP standards; the said element (2) being additionally provided in its circularly shaped part (20a) with a space sufficient for the insertion of toroidal transformers, and also, because of the angle elements (202) located at the corners of a theoretical rectangle, for the insertion of other types of transformers, such as rectangular electronic transformers.

3. Shelf according to the preceding claims, **characterized in that** the elements (2) and (3) have suitable roughened areas, on the outside of the cavities (201) in the case of the first element (2), and on the fins (33) in the case of the second (3), the first (2) having roughened areas (Z2) and the second (3) having roughened areas (Z3), these areas being capable of engaging with each other in a removable way to provide the final covering trim of the shelf.

4. Shelf according to the preceding claim, **characterized in that** the covering trim element (3) engages by means of its roughened areas (Z3) with the roughened areas (Z2) of the element 2 in order to precisely match the rectangular holes (31-32) of the element (3) to the modules (F) fitted removably in the cavities (201) of the element (2).

5. Shelf according to the preceding claims, **characterized in that** the extruded section (P) of plastics material, fitted in the cavity (15) and coming into contact with the circular-section gasket (O) known as a "round gasket", between which other suitable gaskets can be interposed, and fitted in the perimetric cavity (201) of the element (2), produces in combination with the aforesaid element (2), when secured against the element (1) by the screws (V), a hermetically sealed covering of the upper part of the shelf according to the IP standards.
